Europäisches Patentamt

European Patent Office

Office européen des brevets

(11) Numéro de publication : **0 397 655 B1**

(12) **FASCICULE DE BREVET EUROPEEN**

(45) Date de publication du fascicule du brevet :
**16.09.92 Bulletin 92/38**

(51) Int. Cl.⁵ : **G01V 3/02**

(21) Numéro de dépôt : **88909714.3**

(22) Date de dépôt : **22.11.88**

(86) Numéro de dépôt international :
**PCT/BE88/00031**

(87) Numéro de publication internationale :
**WO 90/05923 31.05.90 Gazette 90/12**

(54) **APPAREIL ET PROCEDE DE PROSPECTION ELECTRIQUE DU SOUS-SOL.**

(43) Date de publication de la demande :
**22.11.90 Bulletin 90/47**

(45) Mention de la délivrance du brevet :
**16.09.92 Bulletin 92/38**

(84) Etats contractants désignés :
**AT BE CH DE FR GB IT LI LU NL SE**

(56) Documents cités :
**EP-A- 0 191 996
DE-C- 526 556
FR-A- 2 193 985
GB-A- 2 106 653**

(73) Titulaire : **BUREAU D'ELECTRONIQUE
APPLIQUEE, B.E.A., S.A.
Boulevard Frère-Orban 47
B-4000 Liège (BE)**
Titulaire : **LES ENTREPRISES S.B.B.M. ET SIX
CONSTRUCT
Boulevard Louis Mettewie 74-76, Bte 2
B-1080 Bruxelles (BE)**

(72) Inventeur : **COGELS, Olivier
Chaussée de Huy 23
B-5890 Chaumont-Gistoux (BE)**
Inventeur : **WALEWIJNS, Jean-Luc
Rue de Corbais 24
B-5870 Mont-Saint-Guibert (BE)**
Inventeur : **GILSOUL, Guy
Rue des Juifs 13-15
B-6874 Louette-Saint-Denis (BE)**
Inventeur : **DETHIER, Dominique
Rue de la Bourse 84
B-4240 Saint-Georges-Sur-Meuse (BE)**

(74) Mandataire : **Vanderperre, Robert et al
Bureau Vander Haeghen S.A. Rue Colonel
Bourg 108 A
B-1040 Bruxelles (BE)**

## Description

Domaine technique

La présente invention concerne un appareil et un procédé destinés à la prospection électrique du sous-sol par mesure de résistivité et de polarisation induite.

La prospection électrique repose sur l'examen des variations de la résistivité des roches. Le principe consiste à créer des courants électriques dans le sous-sol en certains points de la surface à l'aide d'électrodes plantées dans le sol et à mesurer les potentiels induits sur des électrodes plantées en d'autres points de la surface. Les mesures des intensités de courants et des potentiels induits sont analysées et interprétées en vue de déterminer la variation spatiale des résistivités du sous-sol et partant les hétérogénéités du sous-sol. Les procédés utilisés varient par la disposition relative des électrodes, la méthode de mesure et/ou la méthode d'analyse et d'interprétation des valeurs mesurées.

Technique antérieure

Un équipement servant à la prospection électrique du sous-sol comporte généralement un générateur de courant stabilisé, un récepteur pour mesurer le potentiel induit, un ensemble d'électrodes à planter dans le sol et un ensemble de câbles pour relier les électrodes au générateur de courant et au récepteur de mesure.

Lorsque le générateur de courant est prévu pour engendrer un courant continu, le récepteur mesure la différence de potentiel entre deux électrodes et lorsque le générateur est prévu pour engendrer un courant alternatif ou un courant pulsé, le récepteur mesure les changements de potentiel entre deux électrodes en fonction du temps ou en fonction des variations de la fréquence du signal injecté.

Le procédé d'investigation traditionnel du sol consiste à effectuer une succession de mesures en déplaçant chaque fois les électrodes d'injection et/ou les électrodes de mesure. Ces différentes mesures permettent d'obtenir deux types de représentation : la résistivité en fonction de la profondeur (sondage électrique) ou la résistivité en fonction de la distance (profil électrique). Ces représentations sont conventionnelles et destinées à être interprétées par un géophysicien expérimenté. Si le nombre de mesures le permet, ces deux types de représentation peuvent être combinés a posteriori pour fournir une représentation bidimensionnelle en coupe verticale. Les inconvénients de ce procédé traditionnel sont nombreux :
– manipulations permanentes d'électrodes, nécessitant une équipe de deux hommes disponibles pendant toute la campagne de mesure,
– mesures manuelles dans des conditions toujours difficiles en raison de bruits de fonds telluriques,
– traitement assez fastidieux des données mesurées sur le terrain,
– nécessité d'une interprétation par des géophysiciens spécialisés,
– durée importante des campagnes de mesure.

Ces dernières années, on a proposé des équipements qui apportent diverses améliorations à la technique de la prospection électrique du sous-sol. Ces améliorations portent sur des dispositifs de commutation permettant de préplanter un ensemble d'électrodes ou d'associer à l'appareil un ordinateur pour l'encodage et l'analyse des mesures. L'état de la technique peut être illustré par la publication EP-0191996. Dans ce document se trouve décrit un appareil permettant de connecter des électrodes indifféremment sur l'un quelconque de quatre conducteurs électriques sous la direction d'un ordinateur. Toutefois, dans cet appareil chaque potentiel électrique induit sur une électrode se trouve acheminé vers un poste de mesure central où un résistivimètre mesure les résistivités du sous-sol. Les conducteurs électriques véhiculant les potentiels induits étant relativement longs, les signaux qu'ils véhiculent se trouvent entachés de nombreux parasites qui dégradent fortement le rapport signal/bruit et rendent de ce fait très difficile une analyse des signaux dans le domaine des fréquences. Une telle analyse dans le domaine des fréquences s'avère cependant nécessaire si l'on veut tenir compte des déphasages et de toutes les fonctions de transfert associés aux équipements et aux circuits de transmission pour toutes les électrodes.

Exposé de l'invention

L'invention a pour objet un appareil composite intégré dans lequel chaque électrode est connectée électriquement à un processeur de mesure dont chacun est conçu et agencé pour réaliser localement une mesure de tension entre deux électrodes et un traitement du signal de mesure, ce qui présente l'immense avantage de raccourcir à un minimum la longueur des fils de mesure et donc réduire au maximum les perturbations des signaux de mesure et réduire de façon optimale le rapport signal/bruit. Cela permet non seulement des mesures de grande fiabilité, mais également une plus grande liberté de programmation des combinaisons d'électrodes et des séquences de mesure.

Un autre objet de l'invention est un appareil intégré dans lequel les moyens permettant de réaliser automatiquement des séquences de mesures avec un grand nombre de combinaisons d'électrodes sont alliés à un ordinateur organisé et dirigé par des logiciels d'analyse et de traitement originaux pour produire quasi automatiquement des courbes de sondage et de profil géophysiques ainsi qu'une carte en coupe verticale bidimensionnelle du sous-sol, qui permet d'offrir in situ une visualisation automatique et rapide des hétérogénéités présentes dans le sous-sol.

L'invention a également pour objet un procédé de prospection électrique du sous-sol, dans lequel le potentiel induit sur une électrode de chaque paire d'électrodes de mesure quelconque est ramené dans un processeur de mesure relié électriquement à l'autre électrode de la paire d'électrodes, et dans lequel la différence entre les potentiels induits sur les deux électrodes est mesurée et traitée dans le processeur de mesure connecté directement à cette autre électrode.

Ces particularités et d'autres particularités de l'invention sont définies dans les revendications ci-annexées.

Un mode d'exécution exemplaire d'un appareil de prospection électrique du sous-sol selon l'invention est décrit dans ce qui suit à l'aide des dessins joints.

## Description des dessins

– La figure 1 est un schéma général simplifié d'un appareil selon l'invention.
– La figure 2 est un schéma d'un exemple d'exécution du processeur de mesure selon l'invention.
– La figure 3 illustre schématiquement les configurations simultanées des processeurs de mesure reliés à deux électrodes de mesure concernées par une mesure de résistivité.
– La figure 4 est un schéma par blocs d'un mode d'exécution exemplaire d'un amplificateur de mesure dans un processeur de mesure.
– La figure 5 illustre schématiquement un processus de traitement des signaux de mesure suivant un aspect de l'invention.
– La figure 6 est un organigramme illustrant le déroulement d'une séquence de mesures suivant l'invention.
– La figure 7 est un exemple de représentation visuelle directe réalisée automatiquement par l'appareil selon l'invention sur le site de prospection même.
– La figure 8 est un exemple de représentation cartographique en coupe verticale bidimensionnelle des résistivités d'un sous-sol, réalisée automatiquement par l'appareil selon l'invention.

## Description d'un mode de réalisation exemplaire

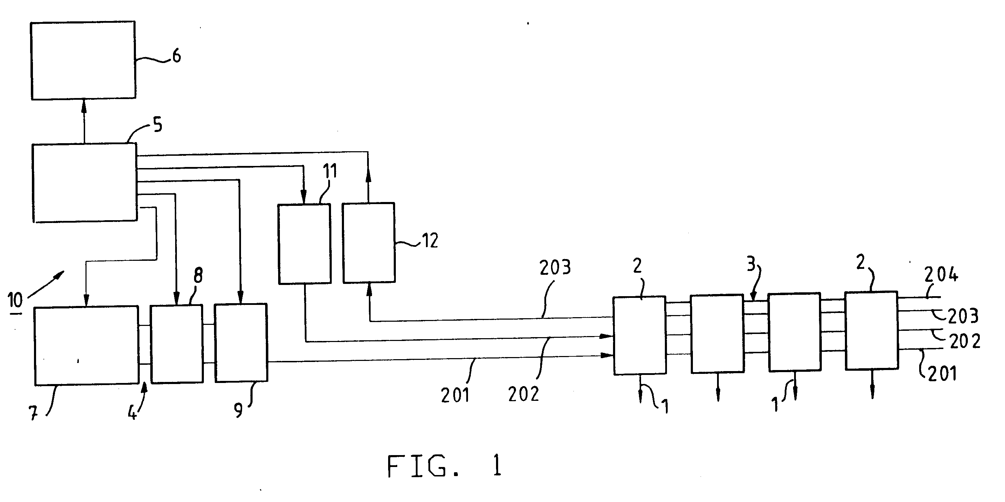

Se reportant à la figure 1, on voit représenté en 1 un ensemble d'électrodes 1 constituées de piquets métalliques destinés à être plantés à intervalles plus ou moins réguliers dans le sol du site à prospecter. Le nombre d'électrodes peut être quelconque, ainsi que leur écartement et leur disposition. Chaque électrode 1 est connectée électriquement à un processeur de mesure 2 agencé et télécommandé pour connecter l'électrode à un circuit d'injection de courant ou à un circuit de mesure et pour effectuer une mesure de potentiel, comme on le verra plus loin. Tous les processeurs de mesure 2 sont reliés entre eux par des câbles multi-lignes 3 et le premier processeur est relié à un générateur de puissance 4 par une ligne bifilaire 201, et un ordinateur 5 par une ligne d'alimentation et de transmission 202 et une ligne de mesure bifilaire 203.

L'ordinateur 5 est organisé et dirigé pour piloter le générateur de puissance 4, télécommander les processeurs de mesure 2 et analyser les signaux de mesure suivant un processus qui sera décrit plus loin. L'ordinateur est par exemple un ordinateur 32 bits 16 MHz, 2 Méga de mémoire centrale, avec disque dur de 40 Méga, IBM PC-AT Compatible, pourvu d'un coprocesseur mathématique. L'ordinateur commande également des périphériques usuels : un écran de monitorage, une imprimante, un traceur ou autres. Le générateur de puissance et l'ordinateur ainsi que les dispositifs associés sont réunis dans une unité centrale 10.

Dans un mode d'exécution exemplaire, le générateur de puissance 4 est constitué d'une source de courant continu 7 réglée par l'ordinateur 5, d'un disjoncteur électronique 8 servant à protéger les circuits en aval contre les surintensités et d'un inverseur de polarité 9 se trouvant sous le contrôle de l'ordinateur 5 afin de produire la forme d'onde voulue pour le courant d'injection. L'inverseur de polarité est par exemple un pont de quatre transistors à effet de champ, type MOS de puissance, commandés par des signaux de l'ordinateur et appliqués par couplage optique.

A partir du signal engendré par la source de courant, l'inverseur de polarité 9 produit le signal d'injection suivant les commandes provenant de l'ordinateur 5. Une commande sert à commander l'inversion de polarité à fréquence variable et l'autre commande sert à définir l'état conducteur ou bloqué. La combinaison de ces deux commandes permet de produire soit un courant pulsé, soit un courant à onde carrée. C'est l'ordinateur qui définit le cycle des temps de passage et de coupure. Dans le cas de courant pulsé, le temps de commutation d'une alternance à l'autre est inférieur à 1 milliseconde. Ce temps mort est nécessaire pour éviter les dépassements. Les fréquences sont situées dans la gamme de 0,125 à 30 Hz par exemple.

Un télétransmetteur 11 commandé par l'ordinateur 5 sert à transmettre sous forme codée sur la ligne d'alimentation et de transmission 202 les données qui spécifient le mode de fonctionnement et la configuration de chaque processeur de mesure 2 concerné par une mesure. Il est par exemple constitué d'un encodeur série-parallèle, type MC 145026 de marque Motorola et d'un transmetteur LM 1893 de marque National Semiconductor Corporation. L'ensemble est pourvu de quinze entrées opto-couplées à l'ordinateur 5. Ce circuit permet d'utiliser le courant d'alimentation du réseau pour transmettre des informations entre emplacements éloignés l'un de l'autre sous forme de trains de bits série avec un codage quelconque. Les informations sont codées par déplacement de fréquence (FSK : Freguency Shift Keying) et superposées au courant d'alimentation. Le télétransmetteur 11 produit des trains de bits qui contiennent chacun l'identification de chaque processeur de mesure concerné et les données nécessaires pour définir le mode de fonctionnement de chacun de ces processeurs ainsi qu'on le verra plus loin.

Pour recevoir les signaux de mesure qu'il a pour objectif d'analyser et de traiter, l'ordinateur a une entrée connectée à un module de conditionnement 12 destiné à convertir le signal de courant reçu de la boucle de mesure en signal de tension propre à être accepté par l'ordinateur. Le module de conditionnement est constitué d'un convertisseur courant-tension (connu en soi) suivi d'un amplificateur d'isolation et d'un filtre passe-bas de quatrième ordre ($f_c$ = 73 Hz) limitant la bande de fréquences du signal utile à la bande scrutable par le coprocesseur pour la mise en oeuvre du processus d'analyse.

Les câbles multi-lignes 3 qui relient entre eux les processeurs de mesure 2 comprennent une ligne d'injection de courant bifilaire 201, une ligne d'alimentation et de transmission de données bifilaire 202, une paire torsadée blindée 203 pour former la boucle de mesure et un câble coaxial de référence 204. Les conducteurs 201, 202 et 203 de ces câbles de liaison servent à prolonger les conducteurs correspondants des lignes 201, 202 et 203 reliant le premier processeur de mesure à l'unité centrale 10.

Dans les processeurs de mesure, les conducteurs de liaison venant de l'unité centrale 10 ou du processeur précédent sont connectés aux bornes d'un connecteur d'entrée 200 et ces bornes sont reliées aux bornes correspondantes d'un connecteur de sortie 200 sur lequel est connecté le câble de liaison suivant. Comme indiqué plus haut, les conducteurs de liaison comprennent une paire d'injection de courant 201, une paire d'alimentation et de transmission de données 202, une paire blindée 203 portant la boucle de mesure et, entre les processeurs de mesure successifs, un câble coaxial de référence 204.

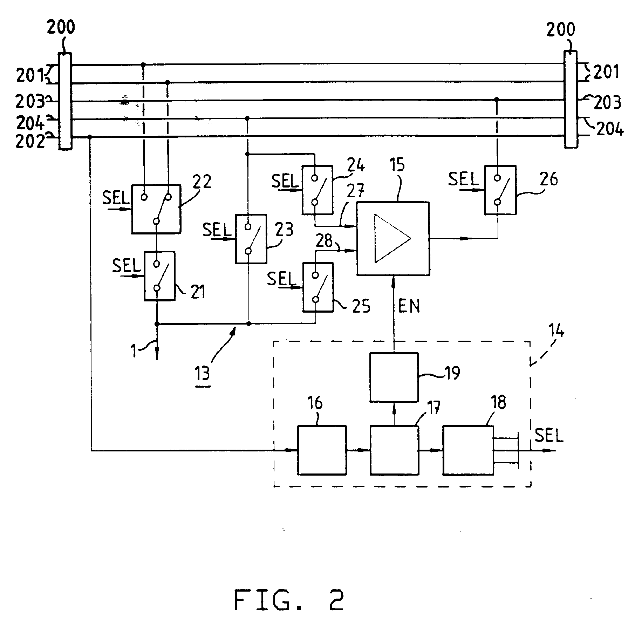

Chaque processeur de mesure 2 a pour fonction non seulement de capter le potentiel induit sur l'électrode respective mais également et avantageusement de mesurer les différences de potentiel entre cette électrode et une électrode distante, et transmettre les signaux de mesure vers l'ordinateur 5. La figure 2 est un schéma simplifié d'un mode d'exécution exemplaire d'un processeur de mesure selon l'invention. En abrégé, un processeur de mesure 2 comprend un dispositif d'interconnexion 13 répondant à des signaux de commande produits par une unité de contrôle 14 afin de mettre le processeur dans la configuration voulue, et un amplificateur de mesure 15 pour recevoir et amplifier le signal de mesure et l'appliquer à la boucle de mesure.

La fonction du dispositif d'interconnexion 13 est de connecter le piquet-électrode 1 associé à un des fils d'injection de courant 201 (polarité positive ou négative) lorsque l'électrode est choisie comme électrode d'injection ou de connecter l'électrode 1 à une entrée de l'amplificateur de mesure 15. Le dispositif d'interconnexion 13 comprend un ensemble de commutateurs 21-26 commandés par des signaux de sélection produits par l'unité de contrôle 14 comme on le verra plus loin. Les signaux de sélection sont représentés symboliquement par les flèches marquées SEL sur la figure 2 pour ne pas surcharger le dessin. Les commutateurs 21-26 peuvent être constitués de dispositifs quelconques connus en soi, par exemple des commutateurs à lames (Reed Switches); ils sont sélectionnés et actionnés conformément à la table de vérité montrée dans le tableau 1. Dans cette table, les symboles ont les désignations suivantes :

G+ électrode connectée au fil d'injection de polarité positive.

G- électrode connectée au fil d'injection de polarité négative.

MA électrode connectée à une entrée de l'amplificateur de mesure (électrode de mesure active).

MP électrode connectée au câble de référence (électrode de mesure passive).

0 état ouvert d'un commutateur.

1 état fermé d'un commutateur.

|      | G+ | G− | MA | MP |
| ---- | -- | -- | -- | -- |
| 21   | 0  | 1  | 0  | 0  |
| 22   | 1  | 1  | 0  | 0  |
| 23   | 0  | 0  | 0  | 1  |
| 24   | 0  | 0  | 1  | 0  |
| 25   | 0  | 0  | 1  | 0  |
| 26   | 0  | 0  | 1  | 0  |

## Tableau 1

Les modes de fonctionnement G+ et G- sont évidents en eux-mêmes et n'appellent aucun commentaire : l'électrode sert d'électrode d'injection. Dans les modes de fonctionnement MA et MP, l'électrode est utilisée comme une des électrodes de mesure entre lesquelles est mesurée la différence de potentiels induits. Dans le mode MA, l'électrode est connectée à une entrée de l'amplificateur de mesure 15, la seconde entrée de cet amplificateur étant connectée au câble de référence 204; dans le mode MP, l'électrode est connectée au câble de référence.

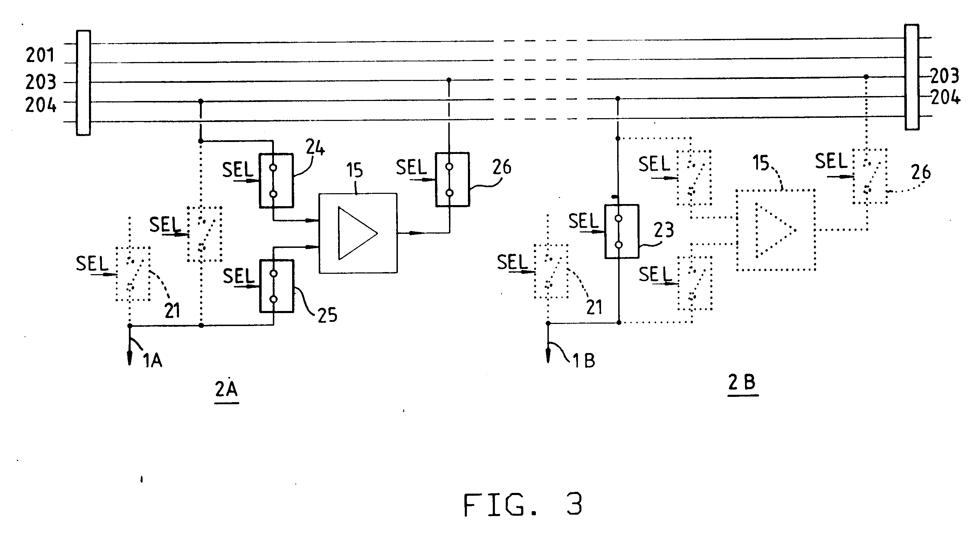

Une mesure de différence de potentiels, on le sait, intéresse deux électrodes. La figure 3 schématise les configurations des deux processeurs de mesure concernés par une mesure : le processeur identifié par la notation 2A représente un processeur actif configuré en mode MA et le processeur identifié par la notation 2B représente un processeur passif configuré en mode MP. Dans le processeur 2A, le potentiel induit sur l'électrode 13 se trouve appliqué à l'entrée 28 de l'amplificateur de mesure 15. L'entrée 27 de l'amplificateur actif reçoit le potentiel présent sur le câble de référence 204 et sur celui-ci est appliqué le potentiel induit sur l'électrode 1B puisque le processeur 2B se trouve configuré en mode MP. L'amplificateur 15 produit à sa sortie un signal proportionnel à la différence de potentiel existant entre ses entrées. Ce signal est avantageusement injecté sous forme de signal de courant dans la boucle de mesure formée sur la paire blindée 203, puis acheminé vers l'ordinateur 5.

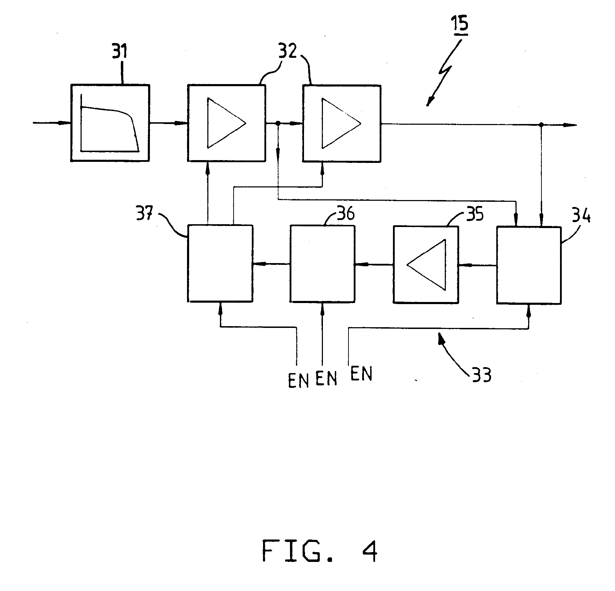

Dans un mode d'exécution exemplaire illustré schématiquement à la figure 4, l'amplificateur de mesure 15 comprend un filtre réjecteur de 50 Hz et passe-bas 31 et un amplificateur à gain ajustable 32 constitué d'un microcircuit XTR 101 de la firme Burr-Brown Corporation. Ce microcircuit est un transmetteur deux-fils travaillant en source de courant capable de délivrer un courant de 4 mA à 20 mA en modulant le courant d'alimentation avec la différence de potentiel d'entrée. Cela évite de prévoir un dispositif séparé pour convertir le signal de tension amplifié en un signal de courant qui est moins sensible aux parasites.

Dans la boucle de régulation de l'amplificateur 32 est avantageusement inséré un dispositif de compensation destiné à réduire à une valeur négligeable le signal dû à la polarisation spontanée. Ce dispositif de compensation 33 comprend par exemple un multiplexeur de prise de compensation 34, un amplificateur d'erreur 35 et un ensemble de mémorisation temporaire numérique formé d'un convertisseur analogique/numérique 36 suivi d'un convertisseur numérique/analogique 37, cet ensemble étant validé par un contrôleur 19 prévu dans l'unité de contrôle 14 et qui répond à un signal d'adresse approprié comme décrit ci-après.

On l'a vu plus haut, le dispositif d'interconnexion 13 est commandé par des signaux de sélection SEL produits par l'unité de contrôle 14 sous la télécommande de l'ordinateur 5. L'unité de contrôle 14 répond à des informations d'adresse contenues dans le train de bits d'adresse produit par le télétransmetteur 11 et lancé sur la paire d'alimentation et de transmission de données 202. Le train de bits d'adresse est reçu dans l'unité de contrôle 14 où il est décodé dans un démodulateur à déplacement de fréquence (type FSK) 16 ayant une entrée et une sortie, suivi d'un décodeur série-parallèle numérique 17. Le démodulateur 13 est semblable au modulateur du télétransmetteur 11 et le décodeur 17 est par exemple un décodeur type MC 145027 de marque Motorola. La sortie du décodeur 17 est connectée à un démultiplexeur 18 qui produit un signal binaire à 16 bits servant à adresser et commander les commutateurs pour le raccordement de l'électrode sur les lignes voulues. Le décodeur numérique 17 produit également un signal de validation EN lorsqu'il a reçu une adresse et une information indiquant que le processeur de mesure doit être actif, c'est-à-dire qu'il doit être connecté en mode MA pour mesurer une différence de potentiels entre deux électrodes. Le signal de validation EN commande le contrôleur 19 pour produire les signaux de réglage pour l'amplificateur de mesure 15. Ces signaux de réglage servent à régler le gain de l'amplificateur 15 et les processus de compensation grossière et fine du signal dû à la polarisation spontanée.

Les signaux de mesure produits dans les processeurs de mesure actifs sont traités dans l'ordinateur 5 sous la direction de logiciels d'analyse afin de déterminer la résistance électrique du sous-sol aux différents endroits explorés sur le site. Suivant une technique connue, l'analyse peut se faire soit dans le domaine temporel, soit dans le domaine des fréquences. Pour l'analyse dans le domaine temporel, chaque signal de mesure (qui représente la différence de potentiels entre deux électrodes) est divisé par le signal représentant le courant injecté. Celui-ci est dans ce cas un signal en onde carrée ayant une fréquence de 0,125 à 30 Hz environ par exemple.

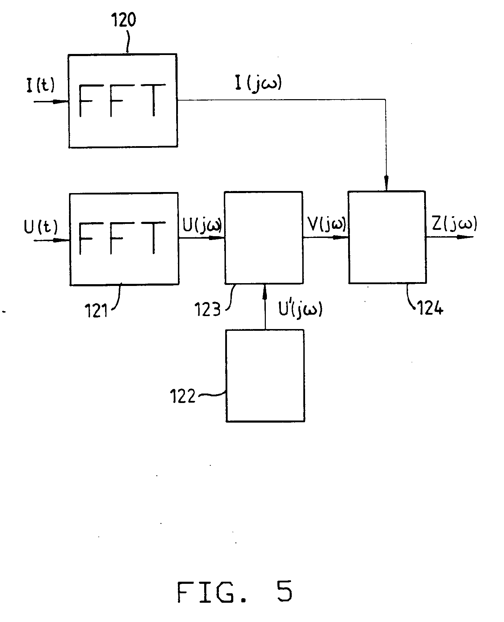

Pour l'analyse dans le domaine des fréquences, l'inverseur de polarité 9 se trouve commandé par l'ordinateur 5 pour produire des signaux d'injection pulsés à 1 Hz par exemple. Sous la direction d'un logiciel d'analyse, le coprocesseur mathématique de l'ordinateur 5 effectue un traitement illustré par le schéma de la figure 5. Une transformation de Fourier rapide (opération connue en soi, représentée par le bloc 120) est effectuée sur un signal numérique représentant le courant injecté I(t) et une transformation de Fourier rapide (opération représentée par le bloc 121) est effectuée sur un signal numérique représentant le signal de potentiel rapatrié U(t). Les transformées de Fourier rapides obtenues sont représentées par les signaux U(jω) et I(jω). Dans une zone de la mémoire de l'ordinateur 5 se trouvent mémorisés des signaux U'(jω) qui représentent la transformée de Fourier rapide de la réponse impulsionnelle de chaque électrode, ladite réponse impulsionnelle étant mesurée en laboratoire (opération représentée par le bloc 122). Dans l'étape représentée par le bloc 123, le signal U(jω) se trouve divisé par chaque signal U'(jω) mémorisé. Cette opération permet de tenir compte de toutes les fonctions de transfert associées aux équipements et aux systèmes de transmission pour toutes les électrodes. Le résultat de cette opération de division fournit un ensemble de signaux V(jω). Le coprocesseur effectue alors une opération de déconvolution (opération connue en soi, représentée par le bloc 124) sur les signaux V(jω) et I(jω) de manière à déterminer l'impédance du sous-sol en fonction de la fréquence et à produire un signal numérique Z(jω) représentant cette impédance.

Grâce à l'invention chaque processeur de mesure 2 peut, comme décrit précédemment, être configuré aussi bien en mode de mesure qu'en mode d'injection; elle permet ainsi de raccourcir à un minimum la longueur de la boucle de mesure, ce qui assure une réduction optimale du rapport signal/bruit. Du fait que chaque processeur permet d'utiliser l'électrode associée comme électrode de mesure active (mode MA) ou électrode de mesure passive (mode MP) ou comme électrode d'injection, le système permet de réaliser des séquences de mesures avec diverses combinaisons d'électrodes de sorte que l'appareil selon l'invention est, de façon avantageuse, capable de réaliser une cartographie précise en coupe verticale. Ces séquences de mesures sont télécommandées, dirigées et contrôlées par l'ordinateur 5.

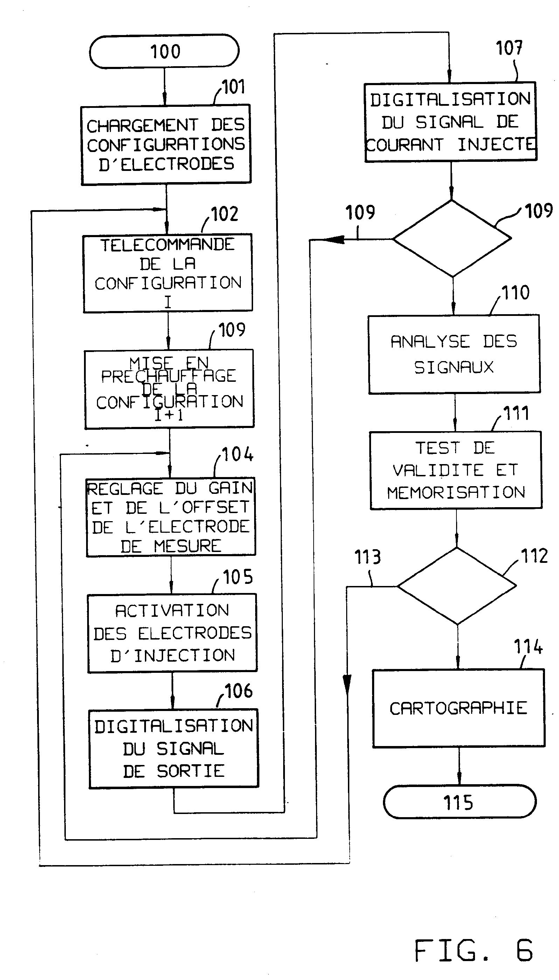

L'ordinateur travaille sous la direction de logiciels organisés pour exécuter automatiquement une séquence de mesures par balayage automatique de différentes combinaisons d'électrodes, chaque combinaison intéressant toujours quatre électrodes, c'est-à-dire deux pour l'injection de courant et deux pour la mesure de potentiel. Le déroulement d'une séquence de mesure est illustré par l'organigramme de la figure 6.

Après initialisation du système dans l'étape 100, le processus commence dans l'étape 101 par le chargement des différentes combinaisons d'électrodes pour la séquence de mesures. Le processus se poursuit par les étapes suivantes :

Etape 102 : télécommande de la première combinaison de mesure avec transmission d'un train de bits sur la paire d'alimentation et de transmission 202.

Etape 103 : mise en préchauffage de la combinaison de mesure suivante.

Etape 104 : réglage du gain et de la compensation de l'amplificateur de mesure dans le processeur actif (mode MA).

Etape 105 : activation des électrodes d'injection G+ et G- par injection d'un courant de forme, de fréquence et d'amplitude préréglés.

Etape 106 : digitalisation du signal de potentiel mesuré.

Etape 107 : mesure du courant d'injection et digitalisation du signal de courant.

Etape 108 : décision de répétition.

Etape 109 : répétition des étapes 104 à 108 jusqu'à ce que le processus de compensation soit effectué.

Etape 110 : analyse des signaux de mesure par traitement mathématique.

Etape 111 : test de validité des signaux de mesure et mémorisation de ces signaux s'ils sont réputés valables.

Etape 112 : décision de passer à la combinaison d'électrodes suivante.

Etape 113 : répétition des étapes 102 à 112 jusqu'à la dernière combinaison programmée.

Etape 114 : traitement des signaux de mesure afin d'établir une cartographie en coupe verticale bidimensionnelle de la résistivité et/ou des propriétés de polarisation induite des roches.

6

Etape 115 :        fin de la séquence et remise à l'état initial du système.

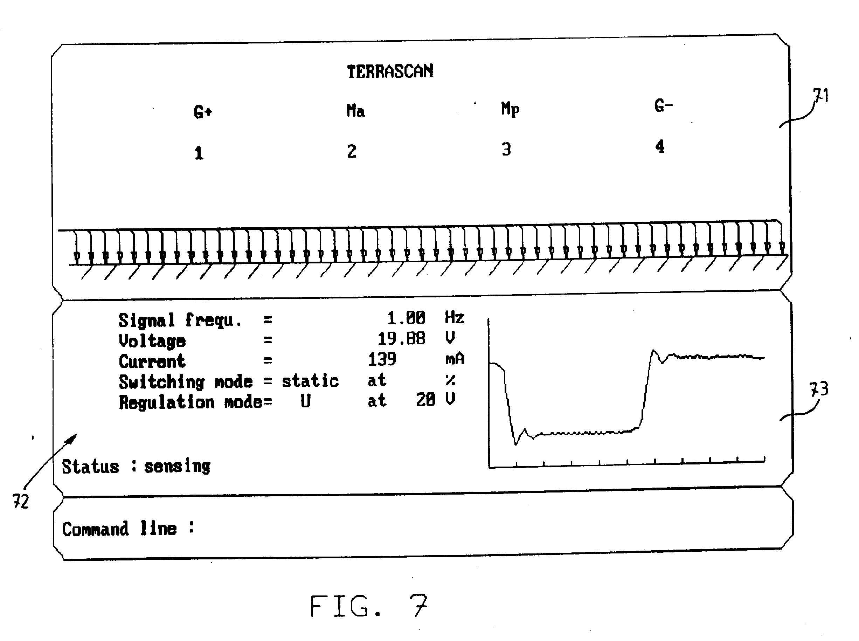

Pendant le déroulement des séquences de mesures, les paramètres de chaque mesure, c'est-à-dire la fréquence du signal injecté, la tension de sortie de la source de courant, l'amplitude du courant injecté, le rapport définissant la forme d'onde du courant injecté et le niveau de la tension régulée, ainsi que l'identification des électrodes concernées par la mesure en cours et la forme d'onde du signal de mesure rapatrié se trouvent affichés sur l'écran moniteur de l'ordinateur 5. C'est un aspect original du système de prospection selon l'invention qui incorpore différents logiciels de traitement à cet effet. La figure 7 illustre un exemple de représentation visuelle directe. L'identification des électrodes est visible sous les symboles G+, Ma, Mp et G- dans la zone 71, les paramètres de mesure sont visibles dans la zone 72 et un exemple de signal de mesure est reproduit dans la zone 73. Grâce aux processus de traitement originaux incorporés dans le système selon l'invention qui sont alliés au procédé de mesure original proprement dit, l'invention offre à l'utilisateur une visualisation directe et automatique des résultats de mesure sur le site de mesure lui-même, et ce avec une remarquable fiabilité.

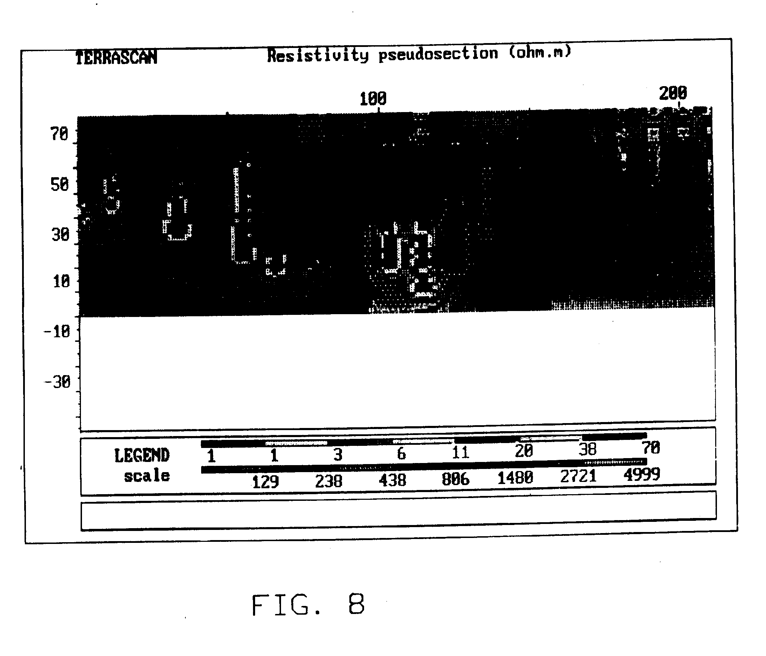

De plus, des logiciels d'analyse particuliers sont avantageusement prévus pour produire automatiquement sur un traceur associé à l'ordinateur 5 des courbes de sondage et de profil géophysiques du sous-sol prospecté et également une carte en coupe verticale bidimensionnelle représentant la distribution des résistivités et/ou des propriétés de polarisation induite du sous-sol prospecté. Les courbes de sondage et de profil géophysiques et les cartes de résistivités et de polarisation induite (chargeabilité du sous-sol) sont connues en soi et très utiles pour le géophysicien afin de lui permettre d'établir la structure et la nature du sous-sol. A titre d'exemple, la figure 8 montre une carte de résistivités exemplaire produite automatiquement et en un laps de temps réduit par un appareil réalisé et utilisé selon l'invention. Jusqu'à présent, cependant, ces documents ne pouvaient être obtenus qu'au prix de laborieuses manipulations sur le site prospecté et de procédures d'interprétation fastidieuses. C'est la mise en oeuvre de l'invention, comme décrit dans ce qui précède, qui permet de produire ces documents avec une précision, une relative facilité et une extrême rapidité sur le site de mesure lui-même.

Les modes de réalisation de l'invention décrits dans ce qui précède sont des exemples donnés à titre illustratif et l'invention n'est nullement limitée à ces exemples. Toute modification, variante ou tout agencement équivalent doit être considéré comme compris dans le cadre de l'invention.

Par exemple, diverses tâches exécutées par l'ordinateur 5 dans le mode de réalisation exemplaire décrit plus haut peuvent être décentralisées et être effectuées dans les processeurs de mesure 2 eux-mêmes. Ceux-ci pourraient être agencés pour procéder sous leur propre contrôlé à la compensation et au réglage du gain de l'amplificateur de mesure simplement en réponse à la réception de la consigne envoyée par l'ordinateur 5, sur la ligne d'alimentation 202, et pour procéder à la recherche de la mesure optimale ainsi qu'à la digitalisation du signal de mesure. Le signal de mesure numérique pourrait alors être transmis à l'ordinateur bit par bit sur la ligne d'alimentation 202 par superposition sur la tension d'alimentation. Ce mode de réalisation permet de supprimer la paire de fils de mesure 203 et de simplifier encore le câblage.

## Revendications

1. Appareil destiné à la prospection électrique du sous-sol par mesure de résistivité et de polarisation induite, comprenant plusieurs électrodes (1) destinées à être plantées dans le sol, et un générateur de puissance pour engendrer un courant électrique d'injection et une ligne d'injection (201) pour acheminer le courant d'injection vers l'une quelconque des électrodes et une unité de commande (5) pour produire des signaux de commande, caractérisé par plusieurs processeurs de mesure (2), un processeur de mesure étant connecté électriquement à chaque électrode, tous les processeurs de mesure (2) étant reliés entre eux par un câble de référence (204), chaque processeur de mesure (2) comprenant un dispositif (15) pour mesurer une différence de potentiel et un dispositif de commutation (13) répondant à un signal de commande pour connecter l'électrode correspondante (1A) à l'un quelconque des fils d'injection (201), ou au dispositif de mesure (15) ou au câble de référence (204), de manière que lorsque l'électrode correspondante (1A) se trouve connectée à une entrée (28) du dispositif de mesure (15), le câble de référence (204) amène à une seconde entrée (27) du dispositif de mesure (15), le potentiel présent sur une électrode distante (1B) associée à un processeur de mesure (2) dans lequel le dispositif de commutation (13) est commandé pour connecter ladite électrode distante au câble de référence (204).

2. Appareil selon la revendication 1, caractérisé en ce que le dispositif de mesure de potentiel (15) comprend un circuit amplificateur (32) travaillant en source de courant de manière à produire un signal de courant proportionnel à la différence de potentiel appliquée à son entrée.

EP 0 397 655 B1

3. Appareil selon la revendication 1 ou 2, caractérisé en ce que les signaux de mesure produits dans les processeurs de mesure actifs (2A) sont transmis sur une ligne de mesure (203) vers l'ordinateur (5).

4. Appareil selon la revendication 1, 2 ou 3, caractérisé en ce que chaque processeur de mesure (2) comprend un circuit électronique de réglage (33) pour compenser automatiquement le signal présent à l'entrée du dispositif de mesure (15) par suite de la polarisation spontanée de l'électrode correspondante.

5. Appareil selon l'une quelconque des revendications précédentes, caractérisé en ce que chaque processeur de mesure (2) comprend une unité de contrôle (14) pour décoder les signaux de commande qui définissent le mode de fonctionnement (MA, MP, G+, G-) de chaque processeur de mesure (2) et pour produire des signaux de sélection (SEL) pour commander le dispositif de commutation (13).

6. Appareil selon la revendication 5, caractérisé en ce que l'unité de contrôle (14) produit en outre un signal de validation (EN) pour régler ledit circuit électronique de réglage.

7. Appareil selon l'une quelconque des revendications précédentes, caractérisé en ce que les signaux de commande pour les processeurs de mesure (2) sont transmis (202) par codage superposé à la tension d'alimentation.

8. Appareil selon l'une quelconque des revendications précédentes, caractérisé en ce que chaque processeur de mesure (2) comprend un moyen pour convertir le signal de mesure sous forme numérique et en ce que les signaux numériques sont transmis à l'ordinateur (5) par superposition sur une ligne d'alimentation et de transmission (202).

9. Appareil selon l'une quelconque des revendications précédentes, caractérisé en ce que l'ordinateur (5) comprend un coprocesseur mathématique organisé (figure 5) pour effectuer une analyse des signaux de mesure dans le domaine des fréquences.

10. Appareil selon l'une quelconque des revendications précédentes, caractérisé en ce que l'ordinateur (5) est organisé et programmé par un logiciel d'analyse pour produire sur un dispositif périphérique (6) sur le site prospecté, des courbes de sondage électrique et/ou de profil électrique.

11. Appareil selon l'une quelconque des revendications précédentes, caractérisé en ce que l'ordinateur (5) est organisé et programmé par un logiciel d'analyse pour produire sur un dispositif périphérique (6) sur le site prospecté, une carte en coupe verticale bidimensionnelle (Figure 8) représentant la distribution des résistivités du sous-sol.

12. Appareil selon l'une quelconque des revendications précédentes, caractérisé en ce que l'ordinateur (5) est organisé et programmé par un logiciel d'analyse pour produire sur un dispositif périphérique (6) sur le site prospecté, une carte en coupe verticale bidimensionnelle représentant la distribution des propriétés de polarisation induite du sous-sol.

13. Procédé de prospection électrique du sous-sol, comprenant les étapes suivantes :
    – plantation de plusieurs électrodes (1) dans le sol à prospecter, chaque électrode étant reliée électriquement à un processeur de mesure (2),
    – disposition d'un câble de référence (204) entre les processeurs de mesure (2),
    – utilisation du câble de référence (204) pour acheminer le potentiel induit sur une électrode sélectionnée quelconque (1B) vers le processeur de mesure (2A) d'une autre électrode sélectionnée (1A), et
    – mesure de la différence entre les potentiels induits sur les électrodes (1A et 1B) dans ledit processeur de mesure (2A).

14. Procédé de prospection électrique du sous-sol selon la revendication 13, caractérisé par le fait que la différence de potentiels mesurée dans un processeur de mesure (2A), y est convertie en un signal de courant produit par une source de courant (32).

15. Procédé de prospection électrique du sous-sol selon la revendication 14, caractérisé par le fait que le signal de courant est transmis dans une ligne (203) vers un dispositif d'analyse (5).

**16.** Procédé de prospection électrique du sous-sol selon la revendication 13 ou 14, caractérisé par le fait que le signal de mesure est converti sous forme numérique avant d'être transmis à un dispositif d'analyse par superposition sur une ligne d'alimentation et de transmission de données (202).

## Patentansprüche

**1.** Gerät zur elektrischen Untersuchung des Untergrunds durch Messung des spezifischen Widerstandes und der induzierten Polarisation, mit mehreren Elektroden (1), die zum Einpflanzen in den Boden bestimmt sind, mit einem Leistungsgenerator zur Erzeugung eines zu injizierenden elektrischen Stromes, mit einer Injektionsleitung (201) zum Führen des Injektionsstromes zu einer beliebigen Elektrode und mit einer Steuereinheit (5) zur Erzeugung von Steuersignalen, gekennzeichnet durch folgende Merkmale:
mehrere Meßprozessoren (2);
ein Meßprozessor ist elektrisch mit jeder Elektrode verbunden; alle Meßprozessoren (2) sind unter sich über ein Bezugskabel (204) verbunden;
jeder Meßprozessor (2) umfaßt eine Einrichtung (15) zur Messung der Potentialdifferenz und eine Umschalteinrichtung (13), die auf ein Steuersignal anspricht und die entsprechende Elektrode (1A) an einen der Injektionsadern (201) oder an die Meßeinrichtung (15) oder an das Bezugskabel (204) legt, so daß, wenn sich die entsprechende Elektrode (1A) mit einem Eingang (28) der Meßvorrichtung (15) verbunden findet, das Bezugskabel (204) das auf einer entfernten Elektrode (1B) vorliegende und einem Meßprozessor (2) zugeordnete Potential einem zweiten Eingang (27) der Meßvorrichtung (15) zuführt, wobei die Umschalteinrichtung (13) in dem Meßprozessor (2) gesteuert wird, um die entfernte Elektrode mit dem Bezugskabel (204) zu verbinden.

**2.** Vorrichtung nach Anspruch 1,
dadurch gekennzeichnet, daß die Potentialmeßvorrichtung (15) einen Verstärker (32) aufweist, der als Stromquelle in der Weise arbeitet, daß er ein Stromsignal erzeugt, welches proportional der Differenz des an seinem Eingang angelegten Potentials ist.

**3.** Vorrichtung nach Anspruch 1 oder 2,
dadurch gekennzeichnet, daß die in den aktiven Meßprozessoren erzeugten Meßsignale auf einer Meßleitung (203) zum Computer (5) übertragen werden.

**4.** Vorrichtung nach Anspruch 1, 2 oder 3,
dadurch gekennzeichnet, daß jeder Meßprozessor (2) eine elektronische Regelschaltung (33) zur automatischen Kompensation des am Eingang der Meßvorrichtung (15) anliegenden Signals aufweist, welches infolge der spontanen Polarisation der entsprechenden Elektrode gebildet worden ist.

**5.** Vorrichtung nach einem der vorhergehenden Ansprüche,
dadurch gekennzeichnet, daß jeder Meßprozessor (2) eine Steuereinheit (14) zur Decodierung der Befehlssignale aufweist, welche die Art des Betriebs (MA, MP, G+, G-) jedes Meßprozessors (2) bestimmen und zur Erzeugung der Wählsignale (SEL) zur Steuerung der Schaltvorrichtung (13) dienen.

**6.** Vorrichtung nach Anspruch 5,
dadurch gekennzeichnet, daß die Steuereinheit (14) außerdem ein Freigabesignal (EN) zur Regelung der elektronischen Regelschaltung erzeugt.

**7.** Vorrichtung nach einem der vorhergehenden Ansprüche,
dadurch gekennzeichnet, daß die für die Meßprozessoren (2) vorgesehenen Befehlssignale über eine der Speisespannung überlagerten Codierung übertragen (202) werden.

**8.** Vorrichtung nach einem der vorhergehenden Ansprüche,
dadurch gekennzeichnet, daß der Meßprozessor (2) eine Einrichtung zur Umwandlung der Meßsignale in humerischer Form aufweist und daß die numerischen Signale dem Computer (5) durch Überlagerung auf der Betriebsspannungs- und Übertragungsleitung (202) übertragen werden.

**9.** Vorrichtung nach einem der vorhergehenden Ansprüche,
dadurch gekennzeichnet, daß der Computer (5) einen mathematischen Coprozessor aufweist, der zur Ausführung einer Analyse der Meßsignale in dem Bereich der Frequenzen organisiert (Fig. 5) ist.

10. Vorrichtung nach einem der vorhergehenden Ansprüche,
dadurch gekennzeichnet, daß der Computer (5) organisiert und durch eine Analysesoftware programmiert ist, um auf einer peripheren Vorrichtung (6) an vorgesehener Stelle elektrische Prüfkurven und/oder elektrische Profile zu erzeugen.

11. Vorrichtung nach einem der vorhergehenden Ansprüche,
dadurch gekennzeichnet, daß der Computer (5) organisiert und durch eine Analysesoftware programmiert ist, um auf einer peripheren Vorrichtung (6) an vorgesehener Stelle eine Karte im vertikalen zweidimensionalen Schnitt (Fig. 8) zu erzeugen, welche die Verteilung der spezifischen Widerstände des Untergrunds darstellt.

12. Vorrichtung nach einem der vorhergehenden Ansprüche,
dadurch gekennzeichnet, daß der Computer (5) organisiert und durch eine Analysesoftware programmiert ist, um auf einer peripheren Vorrichtung (6) an vorgesehener Stelle eine Karte im vertikalen zweidimensionalen Schnitt zu erzeugen, welche die Verteilung der im Untergrund induzierten Polarisationseigenschaften darstellt.

13. Verfahren zur elektrischen Untergrunduntersuchung mit folgrenden Schritten:
einpflanzen mehrerer Elektroden (1) in den zu untersuchenden Untergrund, wobei jede Elektrode elektrisch mit einem Meßprozessor (2) verbunden ist;
Anordnung eines Bezugskabels (204) zwischen den Meßprozessoren (2);
Verwendung des Bezugskabels (204), um das auf einer beliebig ausgewählten Elektrode (1B) induzierte Potential zu dem Meßprozessor (2A) einer anderen ausgewählten Elektrode (1A) zu lenken, und
Messen der Differenz zwischen den auf den Elektroden (1A und 1B) induzierten Potentiale in dem Meßprozessor (2A).

14. Verfahren zur elektrischen Untergrunduntersuchung nach Anspruch 13,
dadurch gekennzeichnet, daß die Differenz der gemessenen Potentiale in dem Meßprozessor (2A) dort in ein Stromsignal umgewandelt wird, das durch eine Stromquelle (32) erzeugt wird.

15. Verfahren der elektrischen Untergrunduntersuchung nach Anspruch 14,
dadurch gekennzeichnet, daß das Stromsignal in einer Leitung (203) zu der Analysevorrichtung (5) übertragen wird.

16. Vorrichtung der elektrischen Untergrunduntersuchung nach Anspruch 13 oder 14,
dadurch gekennzeichnet, daß das Meßsignal in numerischer Form umgewandelt wird, bevor es zu einer Analysevorrichtung übertragen wird, und zwar durch Überlagerung auf einer der Speisung und der Datenübertragung dienenden Leitung (202).

## Claims

1. An apparatus for electric prospecting of sub-soil by measuring the induced polarization and the resistivity, the device comprising a number of electrodes (1) for planting in the soil, and a power generator for generating an electric current for injection and an injection line (201) for feeding the injection current to any of the electrodes and a control unit (5) for producing control signals, characterised by a number of measuring processors (2), a measuring processor being electrically connected to each electrode, all the measuring processors (2) being interconnected by a reference cable (204), each measuring processor (2) comprising a device (15) for measuring a potential difference and a switching device (13) which responds to a control signal for connecting the corresponding electrode (1A) to any of the injection wires (201) or to the measuring device (15) or to the reference cable (204), so that when the corresponding electrode (1A) is connected to an input (28) of the measuring device (15), the reference cable (204) feeds a second input (27) of the measuring device (15) with the potential present at a remote electrode (1B) associated with a measuring processor (2) in which the switching device (13) is controlled so as to connect said remote electrode to the reference cable (204).

2. An apparatus according to claim 1, characterised in that the potential-measuring device (15) comprises an amplifier circuit (32) operating as a current source so as to produce a current signal proportional to the potential difference applied to its input.

3. An apparatus according to claim 1 or 2, characterised in that the measuring signals produced in the active measurement processors (2A) are transmitted along a measurement line (203) to the computer (5).

4. An apparatus according to claim 1, 2 or 3, characterised in that each measuring processor (2) comprises an electronic adjusting circuit (33) for automatically compensating the signal appearing at the input of the measuring device (15) as a result of the spontaneous polarization of the corresponding electrode.

5. An apparatus according to any the preceding claims, characterised in that each measuring processor (2) comprises a monitoring unit (14) for decoding the control signals which define the mode of operation (MA, MP, G+, G-) of each measuring processor (2) and for producing selection signals (SEL) for controlling the switching device (13).

6. An apparatus according to claim 5, characterised in that the monitoring unit (14) also produces an enabling signal (EN) for adjusting the electronic adjusting circuit.

7. An apparatus according to any of the preceding claims, characterised in that the control signals for the measuring processors (2) are transmitted (202) by coding superposed on the supply voltage.

8. An apparatus according to any of the preceding claims, characterised in that each measuring processor (2) comprises a means for converting the measurement signal into digital form, and the digital signals are transmitted to the computer (5) by superposition on a supply and transmission line (202).

9. An apparatus according to any of the preceding claims, characterised in that the computer (5) comprises a mathematical co-processor organised (Fig. 5) so as to analyze the measurement signals in the frequency domain.

10. An apparatus according to any of the preceding claims, characterised in that the computer (5) is organised and programmed by analytical software so as to produce electric sounding and/or electric profile curves on a peripheral device (6) at the site being prospected.

11. An apparatus according to any of the preceding claims, characterised in that the computer (5) is organised and programmed by analytical software so as to produce a map in two-dimensional vertical section (Fig. 8) on a peripheral device (6) at the site being prospected, the map representing the distribution of resistivity in the sub-soil.

12. An apparatus according to any of the preceding claims, characterised in that the computer (5) is organized and programmed by analytical software so as to produce a map in two-dimensional vertical section on a peripheral device (6) at the site being prospected, the map representing the distribution of the induced polarization properties of the sub-soil.

13. A method of electric prospecting of sub-soil, comprising the following steps :
planting of a number of electrodes (1) in the soil to be prospected, each electrode being electrically connected to a measuring processor (2),
disposing a reference cable (204) between the measuring processors (2),
using the reference cable (204) to convey the potential induced at an arbitrary selected electrode (1B) to the measuring processor (2A) of another selected electrode (1A) and
measuring the difference between the potentials induced at the electrodes (1A and 1B) in said measuring processor (2A).

14. A method of electric prospecting of sub-soil according to claim 13, characterised in that the potential difference measured in a measuring processor (2A) is converted therein into a current signal produced by a current source (32).

15. A method of electric prospecting of sub-soil according to claim 14, characterised in that the current signal is transmitted along a line (203) to an analytical device (5).

16. A method of electric prospecting of sub-soil according to claim 13 or 14, characterised in that the measurement signal is converted into digital form before being transmitted to an analytical device by superposition on a data transmission and supply line (202).

FIG. 1

FIG. 2

FIG. 3

EP 0 397 655 B1

FIG. 4

FIG. 5

100

CHARGEMENT DES
CONFIGURATIONS
D'ELECTRODES
101

TELECOMMANDE
DE LA
CONFIGURATION
I
102

MISE EN
PRECHAUFFAGE
DE LA
CONFIGURATION
I+1
109

REGLAGE DU GAIN
ET DE L'OFFSET
DE L'ELECTRODE
DE MESURE
104

ACTIVATION
DES ELECTRODES
D'INJECTION
105

DIGITALISATION
DU SIGNAL
DE SORTIE
106

DIGITALISATION
DU SIGNAL DE
COURANT INJECTE
107

109        109

ANALYSE DES
SIGNAUX
110

TEST DE
VALIDITE ET
MEMORISATION
111

113        112

CARTOGRAPHIE
114

115

FIG. 6

18

EP 0 397 655 B1

**TERRASCAN**

| G+ | Ma | Mp | G- |
|----|----|----|----|
| 1 | 2 | 3 | 4 |

71

Signal frequ.   =            1.00   Hz
Voltage         =           19.88   V
Current         =            139    mA
Switching mode = static     at      %
Regulation mode=    U       at   20 V

Status : sensing

72

73

Command line :

FIG. 7

FIG. 8